# EUROPEAN PATENT APPLICATION

(11) **EP 4 799 849 A1**
(43) Date of publication of application: **02.09.2026**
(21) Application number: 26161012.5
(22) Date of filing: 26.02.2026
(51) Int. Cl.: B60L 1/00, B60L 7/08, B60L 7/18, B60L 7/22, B60L 7/24, B60L 3/00, B60L 7/10, B60L 58/12

(54) **TRU WITH GENERATOR POWER RELEASE SYSTEM**

(30) Priority: 27.02.2025 US 202563764247 P
(71) Applicant: Carrier Corporation, Palm Beach Gardens, FL 33418 (US)
(72) Inventor: CHAPEAU, Lucas, 76520 Franqueville Saint Pierre (FR); AGIRMAN, Ismail, Bloomfield, CT 06002 (US)
(74) Representative: Dehns

(57) **Abstract**

A system (100) having: a power distribution system (500) with: a controller (510); a regenerative braking system (330); an electronic braking system, EBS, (520) that transmits first data (530) to the controller (510) indicative of an EBS status; an energy storage system, ESS, (310) that transmits second data (540) to the controller (510) indicative of an ESS status; a TRU (150), selectively powered by the ESS (310) and by the regenerative braking system (330), that transmits third data (550) to the controller (510) indicative of a TRU status; and a power release system, PRS, (650) that bleeds or stores power from the regenerative braking system (330); wherein the controller (510): renders a first determination that one or more of the first data (530) is indicative of an alert condition while the regenerative braking system (330) is generating power, that the second data (540) implies preventing the generated power from reaching the ESS (310), or the third data (550) implies preventing the generated power from reaching the TRU (150); and control the PRS (650), responsive to the first determination, to bleed or store the generated power.

## Description

### BACKGROUND

The embodiments described herein are directed to a transportation refrigeration unit (TRU) and more specifically to a TRU with a generator power release system.

TRUs may be powered by batteries which may be charged by regenerative braking with the use of a generator. Alternatively, the TRUs may be directly powered by regenerative braking. When the generator is running, it applies a resistive torque to the wheels, and the resistive torque may be relatively high in certain conditions. If the generator power is rapidly interrupted, e.g., if the wheels coupled to the generator slip on ice, there may be a risk for the driver to feel a jolt due to the lack of resistive torque. For safety reasons, regulations require that generator operations for a TRU be imperceptible to the driver.

For example, there are scenarios in which, depending on generator power and gearbox ratio in the regenerative braking system, an acceleration or jolt can be felt by the driver. An e-axle produces energy for several reasons, i.e., the TRU is working and/or the battery is charging. Energy production may be stopped because the electronic braking system requests identifies dangerous driving situations (e.g., ice on the road), or a command to stop generating power is received by a system controller because the ESS is fully charged, the TRU is off, or there is a system failure. If this occurs, energy flow is interrupted too rapidly by rapidly disengaging the generator, the resistive torque applied to the axle ceases, which can cause the trailer to accelerate suddenly and uncontrollably.

### BRIEF SUMMARY

Viewed from a first aspect, a roadway transportation system is disclosed. The roadway transportation system includes: a power distribution system that includes: a system controller; a regenerative braking system; an electronic braking system (EBS) coupled to the system controller and configured to transmit first data to the system controller indicative of an EBS status; an energy storage system (ESS) coupled to the system controller and configured to transmit second data to the system controller indicative of an ESS status; a transport configuration unit (TRU) configured for being selectively powered by the ESS and by the regenerative braking system and configured to transmit third data to the system controller indicative of a TRU status; and a power release system (PRS) coupled to the system controller configured to bleed or store power from the regenerative braking system; wherein the system controller is configured to: render a first determination that one or more of the first data is indicative of an alert condition while the regenerative braking system is generating power, that the second data implies preventing the generated power from reaching the ESS, or the third data implies preventing the generated power from reaching the TRU; and control the PRS, responsive to the first determination, to bleed or store the generated power.

The PRS may include an anti-parallel diode and a resistor, and the system controller is configured to control the anti-parallel diode such that the generated power is bled via the resistor.

The PRS may include a transistor and a resistor, and the system controller is configured to control the transistor such that the generated power is bled via the resistor.

The PRS may include an anti-parallel diode and an energy storage device (ESD), and the system controller is configured to control the anti-parallel diode such that the generated power is stored in the ESD.

The ESD may be one or more of a capacitor or a battery.

The alert condition may be one or more of an emergency braking condition, wheel lock, and stability loss above a threshold.

The system may include a DC bus; a rectifier that couples the regenerative braking system to the DC bus; an inverter that couples the TRU to the DC bus; and wherein the ESS is coupled to the DC bus.

The system may include a step-down converter that couples the ESS to the DC bus.

The system may include an inductor-capacitor filter coupled between the inverter and the TRU.

The inductor-capacitor filter may be coupled to a power grid.

Viewed from a second aspect, a method of utilizing power, in a power distribution system of a roadway transportation system, generated in a regenerative braking system of the roadway transportation system, is provided. The method includes: a system controller: receiving first data from an electronic braking system (EBS) of the roadway transportation system indicative of an EBS status, second data from an energy storage system (ESS) of the power distribution system indicative of an ESS status, and third data from a transport configuration unit (TRU) of the power distribution system indicative of a TRU status, rendering a first determination that one or more of the first data is indicative of an alert condition while the regenerative braking system is generating power, the second data implies preventing the generated power from reaching the ESS, or the third data implies preventing the generated power from reaching the TRU; and controlling a power release system (PRS) of the power distribution system, responsive to the first determination, to bleed or store the generated power.

The method may include the system controller controlling an anti-parallel diode of the PRS such that the generated power is bled via a resistor of the PRS.

The method may include the system controller controlling a transistor of the PRS such that the generated power is bled via a resistor of the PRS.

The method may include the system controller controlling an anti-parallel diode of the PRS such that the generated power is stored in an energy storage device (ESD).

The ESD may be one or more of a capacitor or a battery.

The alert condition may be one or more of an emergency braking condition, wheel lock, and stability loss above a threshold.

The power distribution system may include: a DC bus; a rectifier that couples the regenerative braking system to the DC bus; an inverter that couples the TRU to the DC bus; and wherein the ESS is coupled to the DC bus.

The power distribution system may include a step-down converter that couples the ESS to the DC bus.

The power distribution system may include an inductor-capacitor filter coupled between the inverter and the TRU.

The inductor-capacitor filter may be coupled to a power grid.

### BRIEF DESCRIPTION OF THE DRAWINGS

The present invention is illustrated by way of example and not limited to the accompanying figures in which like reference numerals indicate similar elements.
FIG. 1A shows a roadway transportation system, having a transportation refrigeration unit (TRU);
FIG. 1B is a rear perspective view of the TRU;
FIG. 2A shows details of the TRU of the disclosed system in a front view;
FIG. 2B shows details of the TRU of the disclosed system in a rear view;
FIG. 3 shows a power distribution system of the roadway transportation system with a power release system;
FIG. 4A shows an embodiment of the power release system;
FIG. 4B shows another embodiment of the power release system;
FIG. 4C shows a further embodiment of the power release system;
FIG. 5A shows a graph of generated current, toque and velocity in a configuration of the power distribution system without the power release system;
FIG. 5B shows a graph of generated current, toque and velocity in a configuration of the power distribution system with the power release system; and
FIG. 6 is a flowchart showing a method of utilizing power, in a power distribution system of a roadway transportation system, generated in a regenerative braking system of the roadway transportation system.

### DETAILED DESCRIPTION

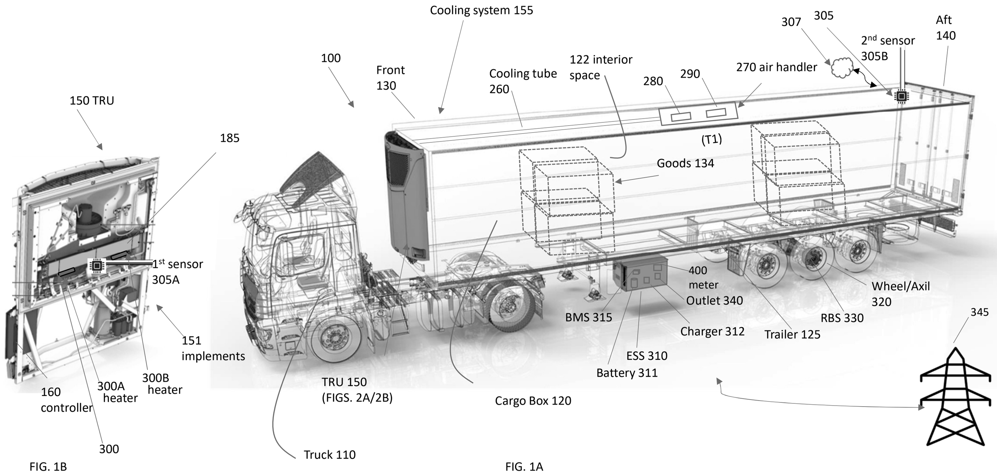

Turning to FIGS. 1A and 1B, a roadway transport system 100 is shown. The system 100 includes a truck 110 that hauls a cargo box 120, such as a refrigerated shipping container supported on a trailer 125. The cargo box 120 extends from a front end 130 to an aft end 140 defining an interior cargo space 122 in which goods 134 of different types are shipped, including nonperishable and perishable goods, i.e., frozen or fresh perishable goods. Perishable goods typically have a short shelf life, such as fruit, vegetables, dairy, and plants. Non-perishable goods may not need extensive or any refrigeration, such as tinned or vacuum-packed goods

The front end 130 of the cargo box 120 includes a transportation refrigeration unit (TRU) 150. The TRU 150 has a cooling system 155 that is capable of maintaining a setpoint temperature (or set temperature) T1 with the interior cargo space 132.

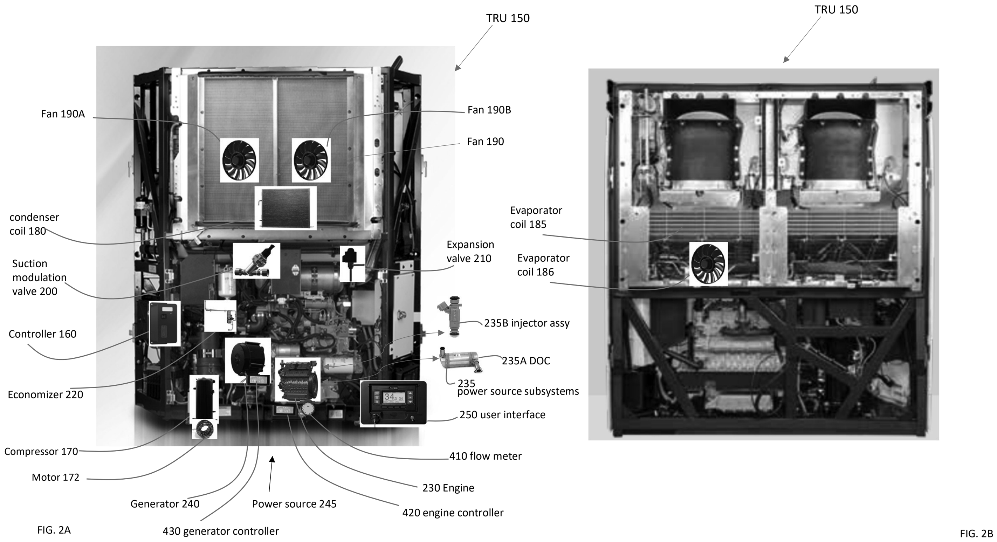

Specifically, as shown in FIGS. 2A and 2B, the TRU 150 includes a TRU controller 160. The TRU controller 160 may be an electronics controller, with an internal processor and non-transitory memory, and the TRU controller 160 may use a CAN-bus communication protocol, as a non-limiting embodiment. A flow motivator 170 of the TRU 150 may be a compressor 170, driven by a compressor motor 172, that pushes a flow of refrigerant through the system 100. The TRU 150 may also have a condenser coil 180, which may be a microchannel condenser coil, that is accompanied by first and second fans 190A, 190B, generally reference as 190. An evaporator coil 185 is shown in FIG. 2B, which is accompanied by an evaporator fan 185. A suction modulation valve 200 of the TRU 150 may control the flow of refrigerant gas into the compressor 170 to regulate temperature control and compressor power. The TRU 150 may also have an expansion valve 210 and an economizer 220 that acts as an evaporator to more precisely control the temperature and flow of the refrigerant entering a main evaporator. An engine 230 of the TRU 150 is controlled by the TRU controller 160 and powers a generator 240 to produce electricity that powers the electrical components of the TRU 150. The engine 230 and generator 240 can be separately or collectively be considered a power source 245. For example, while the generator 240 may run off the engine 230, in some embodiments the generator 240 may run directly off fuel. The engine 230, which may run off diesel fuel, may include a DOC (diesel oxidation catalyst) 235A and an injector assembly 235B (each a subsystem and collectively subsystems 235 of the power source 245). A user interface 250 of the TRU 150 enables a user to access information stored in the TRU controller 160 and engage user provided controls.

Turning back to FIGS. 1A and 1B, the system 100 may include cooling tubes 260 that lead from the primary refrigeration unit (FIG. 1B) to an air chute 270 within the cargo box 120. The air chute 270 includes a secondary evaporator coil 280 and a blower 290. The cooling tubes 260 and air chute 270 are optional and may be replaced with a fan that blows cooled air supplied from the TRU 150 via a duct.

For defrosting the evaporator coil 185, the TRU 150 may have first and second heating elements 300A, 300B, generally referenced as 300, located near, e.g., under the evaporator coil 185 and controlled by the TRU controller 160. To control operation of the compressor 170, the system 100 may include one or more of a first temperature sensor (first sensor) 305A located at the evaporator coil 185 and a second temperature sensor (second sensor) 305B located within the cargo box 120, each indicative a temperature within the cargo box 120. The sensors 305 may communicate with the TRU controller 160 using wired or wireless protocols, e.g., over a network 307. The sensors 305 may be temperature sensors and more specifically return air temperature (RAT) sensors.

To provide supplemental electric power to the TRU 150, the system 100 may include an energy storage system (ESS) 310, with at least one battery 311, mounted under the cargo box 120. Parameters of the ESS 310 may be monitored with a battery management system (BMS) 315 that is coupled to the TRU controller 160. A battery charger 312 may be operationally coupled to the generator 240. Wheels 320 may be equipped with a regenerative braking system (RBS) 330, e.g., motors or other electronics that regeneratively capture energy which can be stored in the ESS 310. Alternatively, the ESS 310 may be charged on the grid 345, such as the U.S. or EU electric power grid, via an outlet 340 electrically coupled to the ESS 310. In certain embodiments, the grid power may be utilized for powering components of the TRU 150 that would otherwise be powered by the ESS 310.

In one embodiment, one or more of the compressor motor 172, the battery charger 312, the evaporator heaters 300, the condenser fans 190 and the evaporator fan 186, which are separately and collectively referred to as TRU electrical implements 151, may be powered by the generator 240, which as indicated, is powered by the engine 230. Lights and other relatively low powered electrical devices of the TRU 150, which may include the TRU controller 160 and user interface 250, may run off the ESS 310. It is to be appreciated that the disclosed configuration of the TRU 150 is a non-limiting example.

The system 100, via the TRU controller 160, may monitor power consumption for the TRU 150, e.g., depending on the energy source utilized by the TRU 150. For components of the TRU 150 that draw power from the ESS 310 consumption can be directly monitored via the BMS 315. For periods of time when power is obtained from the grid 345, consumption of the energy can be determined by a power meter 400, in communication with the BMS 315, monitoring the voltage provided by the grid 345, amperage, i.e., current pulled by the TRU 150, and phase angle between the voltage and the pulled current. For components running of the generator 240, consumption can be inferred by consumption of fuel by the engine 230, which can be monitored by a fuel flow meter 410 coupled to the engine 230 or engine speed from an engine controller 420 coupled to the TRU controller 160. Alternatively, for a system powered by a generator 240, fuel consumption may be obtained by a generator controller 430, coupled to the TRU controller 160, monitoring amperage pulled by the components of the TRU 150. Power consumption may be utilized for determining a cost of operating the TRU 150.

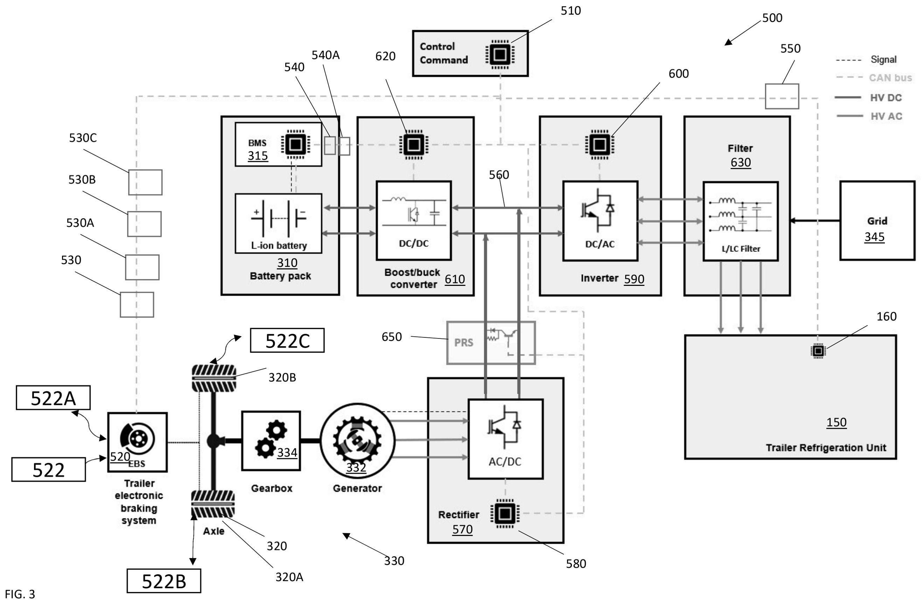

Turning to FIG. 3, a schematic of the roadway transportation system 100 identified above is shown. The system 100 includes a power distribution system 500 that includes a system command controller (i.e., a system controller, or more generally a controller) 510. An electronic braking system (EBS) 520 is coupled to the system controller 510 and configured to transmit first data 530 to the system controller 510 indicative of an EBS status. The energy storage system (ESS) 310 is shown and has the battery management system (BMS) 315 that is coupled to the system controller 510. The ESS 310, via the BMS 315, is configured to transmit second data 540 to the system controller 510 indicative of an ESS status. The transport configuration unit (TRU) 150 has the TRU controller 160 that is operationally coupled to the system controller 510. The TRU 150 is configured for being selectively powered by the ESS 310 and by the regenerative braking system (RBS) 330, which includes a generator 332 and gearing 334 connected to the axle 320. The TRU 150, via the TRU controller 160, is configured to transmit third data 550 to the system controller 510 indicative of a TRU status.

The power distribution system 500 includes a DC bus 560. A rectifier 570 couples the RBS 330 to the DC bus 560. The rectifier 570 includes a rectifier controller 580 operationally coupled to the system controller 510 for controlling conversion of AC power from the RBS 330 to DC power. An inverter 590 couples the TRU 150 to the DC bus 560. An inverter controller 600 is operationally coupled to the system controller 510 for controlling the conversion of DC power from the DC bus 560 to AC power for the TRU 150. A step-down converter 610, also known as a boost/buck converter, couples the ESS 310 to the DC bus 560. A converter controller 620 controls the conversion of power from the ESS 310 to power the TRU 150. An inductor-capacitor filter 630 filters power from the inverter 590 or the grid 345 fed to the TRU 150.

According to an embodiment, a power release system (PRS) 650 is coupled to the system controller 510 and configured to bleed or store power from the RBS 330, as discussed below. More specifically, the system controller 510 is configured to render a first determination, which may include that the first data 530 is indicative of an alert condition while the RBS 330 is generating power. The alert condition can be one or more of an emergency braking condition, wheel lock, and stability loss is otherwise above a threshold.

As part of the first determination, the system controller 510 may determine that the second data 540 implies preventing the generated power from reaching the ESS 310. This could occur because the ESS 310 is fully charged. As part of the first determination, the system controller 510 may determine that the third data 550 implies preventing the generated power from reaching the TRU 150. This could occur because the TRU 150 is off.

To avoid ceasing energy generation too rapidly, which could result in loss of resistive torque and a forward jot in acceleration, when the generated power cannot be directed to the ESS 310 or the TRU 150, the system controller 510 is able to control the PRS 650, to bleed or store the power generated from the RBS 330, and the generator may be controlled to stop more slowly.

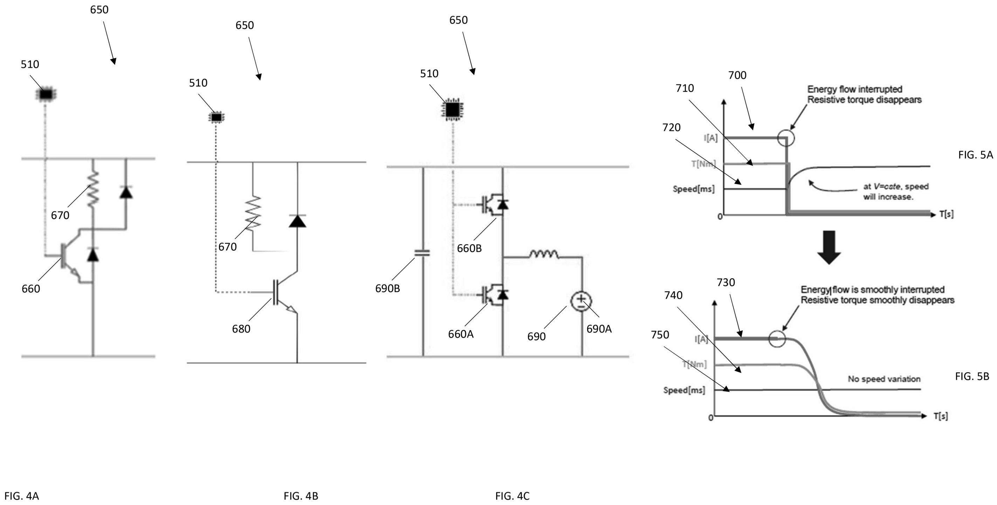

Turning to FIG. 4A, in one embodiment the PRS 650 includes an anti-parallel diode (IGBT) 660 and a resistor 670, and the system controller 510 is configured to control the anti-parallel diode 660 such that the generated power is bled via the resistor 670. Turning to FIG. 4B, in one embodiment the PRS 650 includes a transistor 680 and the resistor 670, and the system controller 510 is configured to control the transistor 680 such that the generated power is bled via the resistor 670. Turning to FIG. 4C, in one embodiment the PRS 650 includes first and second anti-parallel diodes 660A, 660B and an energy storage device (ESD) 690. The ESD 690 is one or more of a battery 690A or a capacitor 690B. The system controller 510 is configured to control the anti-parallel diodes 660A, 660B such that the generated power is stored in the ESD 690.

Disclosed above is a power distribution system 500 that captures the energy during a transient phase of operation, when the generator 332 power generation is required to stop, and the energy generated by the generator 332 cannot be redirected to the ESS 310 or to the TRU 150. The power distribution system 500 is configured to allow the generation of power to stop more gradually, preventing the interruption of the energy flow associated with the sudden stopping of the generator, which would result in a sudden release of resistive torque to the wheels 320 and a sudden and uncontrolled acceleration or motion jolt of the trailer. That is, instead of a rapid stop of the generation of power from the generator, the power generation stop may occur more slowly to prevent a jolt in vehicle speed.

During the slowed stopping of the generator, when power cannot be directed to the ESS 310 or the TRU 150, the power distribution system 500 redirects the energy to the PRS 650 to be bled or stored. If stored, the captured energy may be used to charge the ESS 310, and to support the TRU start at a later time. Benefits of the power distribution system 500 include added safety, reliability and energy saving operations of the roadway transport system 100. The power distribution system 500 improves the reliability and resilience of various parts of the roadway transport system 100, including the TRU 150, by putting less stress on such parts during the transient operational phase, when the generator rapidly disengages the braking system.

For example, as shown in FIG. 5A, without the PRS 650, when the generator rapidly disengages and current (line 700) drops instantly to zero, resistive torque (line 710) drops to zero, and speed (line 720) has a rapid increase. As shown in FIG. 5B, with the PRS 650, when the generator rapidly disengages, current (line 730) is prevented from dropping instantly to zero, resistive torque (line 740) is also prevented from dropping to zero, and speed (line 750) remains constant.

According to an embodiment, the system controller 510, when determining whether to operate the PRS 650, may continuously monitor inputs from the EBS 520 or EBS sensors 522A (generally status sensors 522) onboard the EBS 520 of speed sensors 522B coupled to the wheel or axle 320 to detect wheel speed, which can be used to determine the speed but also a differential. The PRS 650 may be activated if any of the following conditions persist beyond a defined timing threshold.

A first condition is a status of the EBS 520. For example, the status of the EBS 520 may indicate emergency braking. That is, an emergency braking signal 530A may be received by the system controller 510, i.e., an emergency braking flag may be set to active through trailer communication protocol, such as CAN. As a further example, the status of the EBS 520 may indicate a wheel lock. A speed signal 530B from the wheel speed sensors 522B, 522C associate with each wheel 320 may indicate that one or more wheels 320 are locking, e.g., indicating drop in rotational speed beyond a set threshold. For example, a wheel speed difference between adjacent wheels 320A, 320B may exceed a certain percentage. As a further example, the status of the EBS 520 may indicate a stability loss. Stability metrics may be obtained via an EBS-Roll Stability System (RSS) signal 530C, sent to the system controller 510 via a CAN message.

According to an embodiment, the system controller 510, when determining whether to operate the PRS 650, may monitor the status of the ESS 310. For example, e.g., the system controller 510 may monitor a first ESS signal 540A to determine whether the ESS 310 has reached a full charge. If the state of charge exceeds a preset threshold, e.g., 100%, indicating that the ESS 310 cannot accept additional energy, and at the same time the TRU 150 does not require additional energy, the PRS 650 may be controlled to accommodate this condition to avoid a motion jolt. For timing considerations, there may be an activation delay to ensure that the alert condition is stable before activating the PRS 650.

In one embodiment, when one of the above conditions is detected, the system controller 510 starts a timer. If the condition persists continuously for at least a time above a threshold, e.g., 50-100 milliseconds as a non-limiting example, which may be adjustable based on system dynamics, then the system controller 510 proceeds to activate the PRS 650. A deactivation delay may be utilized to avoid rapid toggling of the PRS 650, if, e.g., the alert condition is transient and disappears. Once the alert condition is cleared, the PRS 650 may remain activated for a short additional period, e.g., 50-100 milliseconds as a non-limiting example, before being deactivated, unless a new alert is detected in the interim.

Hysteresis in sensor thresholds may be applied by the system controller 510, e.g., slightly higher thresholds may be applied for deactivation of the PRS 650 compared with activation, to prevent oscillations in the state of the PRS 650. This action by the system controller 510 may minimize false triggers and ensures that transient conditions do not lead to an unnecessary activation of the PRS 650. Timing values and thresholds can be fine-tuned during system validation and testing to best match the operational characteristics of the specific application.

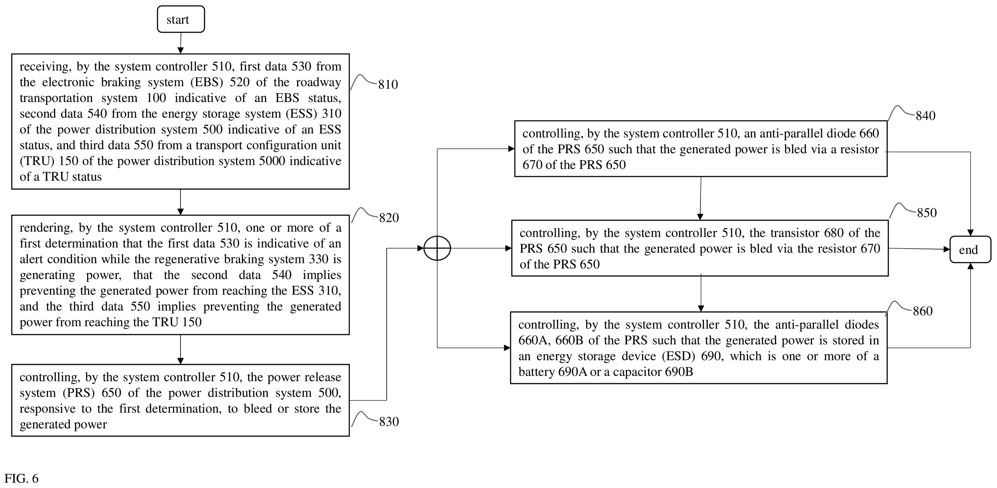

Turning to FIG. 6, a flowchart shows a method of utilizing power, in a power distribution system 500 of a roadway transportation system 100, generated in a regenerative braking system 330 of the roadway transportation system 100. As shown in block 810, the method includes receiving, by the system controller 510, first data 530 from the electronic braking system (EBS) 520 of the roadway transportation system 100 indicative of an EBS status, second data 540 from the energy storage system (ESS) 310 of the power distribution system 500 indicative of an ESS status, and third data 550 from a transport configuration unit (TRU) 150 of the power distribution system 5000 indicative of a TRU status.

As shown in block 820 the method includes rendering, by the system controller 510, one or more of a first determination that the first data 530 is indicative of an alert condition while the regenerative braking system 330 is generating power, that the second data 540 implies preventing the generated power from reaching the ESS 310, and the third data 550 implies preventing the generated power from reaching the TRU 150. As indicated, the alert condition may be one or more of an emergency braking condition, wheel lock, and stability loss above a threshold. As shown in block 830, the method includes controlling, by the system controller 510, the power release system (PRS) 650 of the power distribution system 500, responsive to the first determination, to bleed or store the generated power.

As shown in block 840, controlling the PRS 650 includes controlling, by the system controller 510, an anti-parallel diode 660 of the PRS 650 such that the generated power is bled via a resistor 670 of the PRS 650. This corresponds to the PRS 650 shown in FIG. 4A. As shown in block 850, controlling the PRS 650 includes controlling, by the system controller 510, the transistor 680 of the PRS 650 such that the generated power is bled via the resistor 670 of the PRS 650. This corresponds to the PRS 650 shown in FIG. 4B. As shown in block 860, controlling the PRS 650 includes controlling, by the system controller 510, the anti-parallel diodes 660A, 660B of the PRS such that the generated power is stored in an energy storage device (ESD) 690, which is one or more of a battery 690A or a capacitor 690B. This corresponds to the PRS 650 shown in FIG. 4C.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and LTE Category M1 internet of things (LTE Cat M1-IOT or LTE-M). Wireless communications for the disclosed systems may include cellular, e.g. 2G/3G/4G/5G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended to limit the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present invention. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A roadway transportation system (100) comprising:
a power distribution system (500) that includes:
a system controller (510);
a regenerative braking system (330);
an electronic braking system, EBS, (520) coupled to the system controller (510) and configured to transmit first data (530) to the system controller (510) indicative of an EBS status;
an energy storage system, ESS, (310) coupled to the system controller (510) and configured to transmit second data (540) to the system controller (510) indicative of an ESS status;
a transport configuration unit, TRU, (150) configured for being selectively powered by the ESS (310) and by the regenerative braking system (330) and configured to transmit third data (550) to the system controller (510) indicative of a TRU status; and
a power release system, PRS, (650) coupled to the system controller (510) configured to bleed or store power from the regenerative braking system (330);
wherein the system controller (510) is configured to:
render a first determination that one or more of the first data (530) is indicative of an alert condition while the regenerative braking system (330) is generating power, that the second data (540) implies preventing the generated power from reaching the ESS (310), or the third data (550) implies preventing the generated power from reaching the TRU (150); and
control the PRS (650), responsive to the first determination, to bleed or store the generated power.

2. The system (100) of claim 1, wherein the PRS (650) includes an anti-parallel diode (660) and a resistor (670), and the system controller (510) is configured to control the anti-parallel diode (660) such that the generated power is bled via the resistor (670).

3. The system (100) of claim 1 or 2, wherein the PRS (650) includes a transistor (680) and a resistor (670), and the system controller (510) is configured to control the transistor (680) such that the generated power is bled via the resistor (670).

4. The system (100) of any of claims 1-3, wherein the PRS (650) includes an anti-parallel diode (660A, 660B) and an energy storage device, ESD, (690) and the system controller (510) is configured to control the anti-parallel diode (660A, 660B) such that the generated power is stored in the ESD (690);
optionally wherein the ESD is one or more of a capacitor (690B) or a battery (690A).

5. The system (510) of any preceding claim, wherein the alert condition is one or more of an emergency braking condition, wheel lock, and stability loss above a threshold.

6. The system of any preceding claim, including:
a DC bus (560);
a rectifier (570) that couples the regenerative braking system (330) to the DC bus (560);
an inverter (590) that couples the TRU (150) to the DC bus (560); and
wherein the ESS (310) is coupled to the DC bus (560).

7. The system (100) of claim 6, including a step-down converter (610) that couples the ESS (310) to the DC bus (560).

8. The system (100) of claim 6 or 7, including an inductor-capacitor filter (630) coupled between the inverter (590) and the TRU (150); optionally wherein the inductor-capacitor filter (630) is coupled to a power grid (345).

9. A method of utilizing power, in a power distribution system (500) of a roadway transportation system (100), generated in a regenerative braking system (330) of the roadway transportation system (100), the method including:
a system controller (510):
receiving first data (530) from an electronic braking system, EBS, (520) of the roadway transportation system (100) indicative of an EBS status, second data (540) from an energy storage system, ESS, (310) of the power distribution system (500) indicative of an ESS status, and third data (550) from a transport configuration unit, TRU, (150) of the power distribution system (500) indicative of a TRU status,
rendering a first determination that one or more of the first data (530) is indicative of an alert condition while the regenerative braking system (330) is generating power, the second data (540) implies preventing the generated power from reaching the ESS (310), or the third data (550) implies preventing the generated power from reaching the TRU (150); and
controlling a power release system, PRS, (650) of the power distribution system (500), responsive to the first determination, to bleed or store the generated power.

10. The method of claim 9, including the system controller (510) controlling an anti-parallel diode (660) of the PRS (650) such that the generated power is bled via a resistor (670) of the PRS (650).

11. The method of claim 9 or 10, including the system controller (510) controlling a transistor (680) of the PRS (650) such that the generated power is bled via a resistor (670) of the PRS (650).

12. The method of any of claims 9-11, including the system controller (510) controlling an anti-parallel diode (660A, 660B) of the PRS (650) such that the generated power is stored in an energy storage device, ESD (690);
optionally wherein the ESD is one or more of a capacitor (690B) or a battery (690A).

13. The method of any of claims 9-12, wherein the alert condition is one or more of an emergency braking condition, wheel lock, and stability loss above a threshold.

14. The method of any of claims 9-13, wherein the power distribution system (500) includes:
a DC bus (560);
a rectifier (570) that couples the regenerative braking system (330) to the DC bus (560);
an inverter (590) that couples the TRU (150) to the DC bus (560); and
wherein the ESS (310) is coupled to the DC bus (560);
optionally wherein the power distribution system (500) includes a step-down converter (610) that couples the ESS (310) to the DC bus (560).

15. The method of any of claim 14, wherein the power distribution system (500) includes an inductor-capacitor filter (630) coupled between the inverter (590) and the TRU (150);
optionally wherein the inductor-capacitor filter (630) is coupled to a power grid (345).
